Europäisches Patentamt

European Patent Office

Office européen des brevets

(19)

(11) Veröffentlichungsnummer: **0 190 637**
**B1**

(12) **EUROPÄISCHE PATENTSCHRIFT**

(45) Veröffentlichungstag der Patentschrift: **16.08.90**

(51) Int. Cl.⁵: **B 01 J 47/04, C 02 F 1/20**

(21) Anmeldenummer: **86101052.8**

(22) Anmeldetag: **27.01.86**

(54) **Verfahren zur Entfernung von elementarem Sauerstoff mittels eines Reduktionsmittels in einem oder mehreren geschlossenen Kreisläufen zirkulierenden Kühlmittel und Vorrichtung zur Entfernung von elementarem Sauerstoff.**

(30) Priorität: **05.02.85 CH 511/85**

(43) Veröffentlichungstag der Anmeldung:
**13.08.86 Patentblatt 86/33**

(45) Bekanntmachung des Hinweises auf die
Patenterteilung:
**16.08.90 Patentblatt 90/33**

(84) Benannte Vertragsstaaten:
**CH DE FR IT LI NL SE**

(56) Entgegenhaltungen:
**DE-A-2 608 399**
**US-A-3 267 073**
**US-A-3 312 616**
**US-A-4 282 111**
**US-A-4 348 289**

**VGB KRATWERKSTECHNIK, Band 64, Nr. 1,
januar 1984, Seiten 61-63; F. MARTINOLA et al.:
"Ein starkbasischer Anionenaustauscher mit
zwei Funktionen"**

(73) Patentinhaber: **BBC Brown Boveri AG**
**Haselstrasse**
**CH-5401 Baden (CH)**

(72) Erfinder: **Kuhn, Albert, Dr.**
**Goldwandstrasse 5**
**CH-5400 Ennetbaden (CH)**
Erfinder: **Müller, Reinhard, Dr.**
**Schartenstrasse 47**
**CH-5400 Baden (CH)**

**Beschreibung**

Die Erfindung geht aus von einem Verfahren zur Entfernung von elementarem Sauerstoff in einem flüssigen Kühlmittel nach der Gattung des Oberbegriffs des Anspruchs 1 einer Vorrichtung zur Entfernung von elementarem Sauerstoff nach der Gattung des Oberbegriffs des Anspruchs 4.

In der Elektrotechnik, insbesondere im Elektromaschinen- und Elektroapparatebau werden an zahlreichen Stellen teilweise oder vollständig geschlossene Kreisläufe eines flüssigen Kühlmittels benötigt. Sowohl aus elektrischen wie aus Gründen des Korrosionsschutzes ist es in vielen Fällen erforderlich, dass das Kühlmittel, meist Wasser, frei von Sauerstoff und frei von Salzen vorliegt. Meist treten in solchen Kühlkreisläufen an Expansionsgefässen, Schläuchen, Ventilen und anderen kritischen Stellen Sauerstoffeinbrüche auf, so dass der im Kühlmittel suspendierte und gelöste Sauerstoff kontinuierlich entfernt werden muss.

Die Entsalzung des Kühlmittels erfolgt meistens durch Ionenaustauscher in sogenannten Mischbettfiltern. Um unter allen Umständen Salzfreiheit des Kühlmittels zu gewährleisten, muss mindestens ein Teil des letzteren in einem Nebenkreislauf kontinuierlich über ein Mischbettfilter aufbereitet werden. Verwendet man dabei gleichzeitig beispielsweise mit Hydrochinon aktiviertes Hydrazin (Handelsname: Levoxin) als Reduktionsmittel zue Entfernung des Sauerstoffs, so verliert das im Kationenaustauscher gebundene Hydrazin seine reduzierende Wirkung, da es nicht mehr ausreichend aktiviert wird.

Um die Reduktion von Sauerstoff sicherzustellen, könnte grundsätzlich ein zusätzlicher, mit einem geeigneten Reduktionsmittel beladener Anionen- oder Kationenaustauscher vor oder nach das Mischbettfilter geschaltet werden. Dies bedeutet aber einen erheblichen Aufwand sowohl in Bezug auf die Installation wie auf die Betriebsführung. Die Regeneration und Wiederbeladung dieses zusätzlichen Ionenaustauschers stellt eine bedeutende Komplikation der Prozessführung dar.

Es ist schon vorgeschlagen worden, an Ionenaustauscherharze gebundene Reduktionsmittel wie $Fe^{2+}$, $Ce^{3+}$, $Sn^{2+}$, $Cu^+$, $SO_3^{2-}$, $SO_2^-$ etc. zur Sauerstoffreduktion zu verwenden (vgl. z.B. DD—A 63334, DD—A 47374, GB—A 788 112). Nachgewiesenermassen sind aber die meisten dieser üblichen Reduktionsmittel im Mischbettfilter zu wenig aktiv. Sie erzielen daher einen für strenge Anforderungen zu kleinen $O_2$-Umsatz.

Aus dem Vorstehenden ergibt sich das Bedürfnis, die herkömmlichen Verfahren zur Entsalzung und zur Entfernung von Sauerstoff aus dem Kühlmittel zu verbessern und zu vereinfachen.

Der Erfindung liegt die Aufgabe zugrunde, ein Verfahren sowie eine Vorrichtung zur Entfernung von elementarem Sauerstoff mittels eines Reduktionsmittels aus einem gleichzeitig vollständig zu entsalzenden flüssigen Kühlmittel anzugeben, wobei die üblicherweise zur Entsalzung vorliegenden Ionenaustauscher-Mischbettfilter ausgenutzt werden und kein wesentlicher zusätzlicher apparativer oder betriebstechnischer Aufwand notwendig sein soll. Das Verfahren soll einfach, auch an bestehenden Anlagen, durchführbar sein und sich insbesondere für Kühlkreis läue für elektrische Generatoren, Generator-Statoren, Generatorschalter-Gleichrichter und andere elektrische Apparate eignen.

Dies Aufgabe wird durch die im kennzeichnenden Teil des Anspruchs 1 sowie des Anspruchs 4 angegebenen Merkmale gelöst.

Die Erfindung wird anhand der nachfolgenden, durch eine Figur näher erläuterten Ausführungsbeispiele beschrieben.

Dabei zeigt:

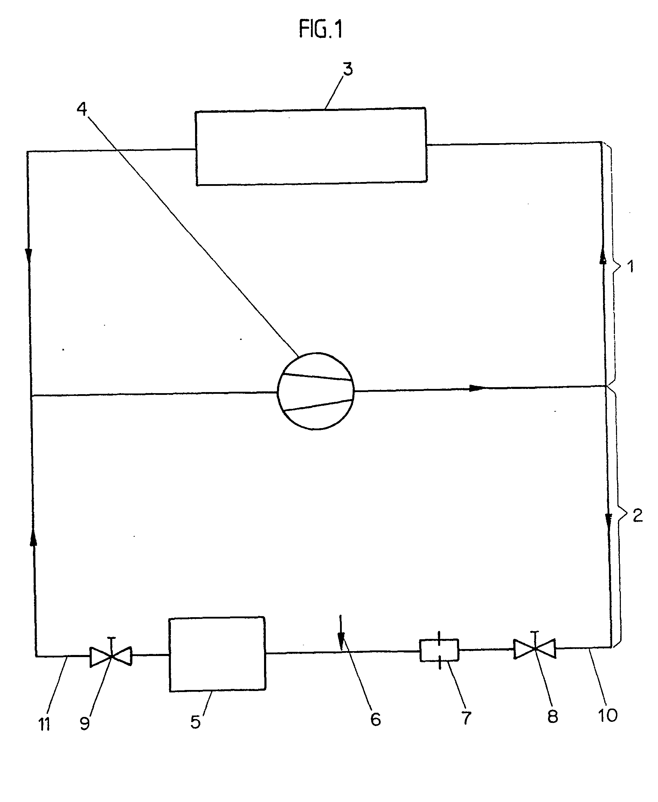

die Figur ein schematisches Fliessbild eines Kühlkreislaufes zur Entsalzung und Sauerstoff-Entfernung aus dem Kühlmittel.

Der gesamte Kühlmittel-Kreislauf ist in einen Hauptkreislauf 1 und einen Nebenkreislauf 2 aufgeteilt. Im ersteren befindet sich die Gesamtheit der Geräte 3, d.h. der zu kühlenden Apparate und Maschinen, sowie der entsprechenden Wärmeaustauscher, Armaturen etc. Ferner ist eine gemeinsame Umwälzpumpe 4 für beide Kreisläufe zusammen vorgesehen, 5 stellt ein Ionenaustauscher-Mischbettfilter dar, das wenigstens teilweise mit dem Sauerstoff-Reduktionsmittel beladen ist. 6 ist das allgemeine Symbol für ein nicht näher spezifiziertes mechanisches, hydraulisches oder mechanisch-hydraulisches Mittel zur Dosierung des Reduktionsmittels. Im Nebenkreislauf 2 sind ferner eine Blende 7 zur Durchflussmengeneinstellung und je ein Absperrhahn 8 auf der Eingangsseite sowie ein solcher 9 auf der Ausgangsseite des Ionenaustauscher-Mischbettfilters 5 vorgesehen. 10 stellt dus Kühlmittel vor der Entsalzung und vor der Sauerstoff-Entfernung, 11 das Kühlmittel nach der Entsalzung und Sauerstoff-Entfernung dar.

Ausführungsbeispiel I:

In einem Kühlmittel-Kreislauf gemäss Figur wurde an der Stelle des Mittels 6 zur Dosierung eine 30%-ige, wässrige Lösung von Ascorbinsäure (Vitamin C) als Reduktionsmittel dem Kühlmittel mit Hilfe einer Spritze beigegeben. Die zu dosierende Menge wurde entsprechend dem zu erwartenden Bedarf und der vorhandenen Anionenaustauscherharzmenge abgestimmt. Im allgemeinen sollten 50% der Anionenaustauscherkapazität nicht überschritten werden.

Ausführungsbeispiel II:

In den Kühlmittel-Kreislauf gemäss Figur wurde an der Stelle des Mittels 6 eine 15%-ige wässrige Lösung von Hydrazin ($NH_2NH_2$) als Reduktionsmittel eingespritzt, welche—bezogen auf die Hydrazinmenge—1% eines Aktivierungsmittels enthält. Die zu dosierende Hydrazinmenge richtet sich wiederum nach dem Bedarf und—in diesem Fall—der vorhandenen Kationenaustauscherharzmenge. Eine Begrenzung auf etwa 50% der Kationenaustauscherkapazität ist sinnvoll.

Die Erfindung ist nicht auf die Ausführungsbeispiele beschränkt.

Als Reduktionsmittel bieten sich neben Hydrazin auch noch Hydroxylamin (NH$_2$OH) und Hydrochinon (1,4 Dihydroxybenzol) an. Bei letzterem empfiehlt sich eine wässrige Lösung von max. 10%.

Als Aktivierungsmittel kommen folgende Substanzen in Frage:

—Metallkomplexe (Co, Fe, etc.) mit Phtalocyanin und dessen Derivaten

—1,1'-Dibenzyl-4,4'-bipyridinium salz (Benzylviologen) und andere 4,4'-Bipyridinium-Verbindungen

—2,6-Diamino-anthrachinon und andere Anthrachinonderivate

—Cu, Pd und andere katalytisch wirksame Metalle.

Die beiden letzteren Metalle bzw. Metallionen werden mit Vorteil nicht mit dem Reduktionsmittel vor der Dosierung vermischt, sondern als separate, verdünnte Metallsalzlösungen zuerst zugegeben.

**Patentansprüche**

1. Verfahren zur Entfernung von elementarem Sauerstoff mittels eines Reduktionsmittels aus einem in einem oder mehreren geschlossenen Kreisläufen zirkulierenden flüssigen Kühlmittel, wobei ein Teil des Kühlmittels zwecks Entsalzung kontinuierlich oder intermittierend vom Hauptkreislauf (1) abgezweigt und in einem Nebenkreislauf (2) einem Ionenaustauscher-Mischbettfilter (5) zugeführt wird, dadurch gekennzeichnet, dass das im Ionenaustauscher-Mischbettfilter (5) enthaltene Anionen- oder Kationenaustauscherharz unmittelbar wenigstens teilweise mit dem Reduktionsmittel beladen wird, derart, dass dieses direkt an das Anionen- oder Kationaustauscherharz gebunden ist.

2. Verfahren nach Anspruch 1, dadurch gekennzeichnet, dass als Reduktionsmittel Ascorbinsäure verwendet wird.

3. Verfahren nach Anspruch 1, dadurch gekennzeichnet, dass als Reduktionsmittel Hydrazin NH$_2$NH$_2$ oder Hydroxylamin NH$_2$OH verwendet wird, wobei in beiden Fällen als Aktivierungsmittel Metall-Phtalocyanin-Komplexe, 4, 4'-Bipyridinium-Verbindungn, Anthrachinonderivate oder katalytisch wirksame Metalle vorgesehen sind.

4. Vorrichtung zur Entfernung von elementarem Sauerstoff mittels eines Reduktionsmittels aus einem in einem oder mehreren geschlossenen Kreisläufen zirkulierenden flüssigen Kühlmittel, wobei ein die Gesamtheit der Geräte (3) im Kühlkreislauf enthaltender Hauptkreislauf (1) sowie ein Nebenkreislauf (2) mit einem Ionenaustauscher-Mischbettfilter (5) und eine gemeinsame Umwälzpumpe (4) vorgesehen ist, dadurch gekennzeichnet, dass unmittelbar vor dem Ionenaustauscher-Mischbettfilter (5) eine Einrichtung (6) zur Dosierung des Reduktionsmittels vorgesehen ist, dergestalt, dass das Ionenaustauscher-Mischbettfilter (5) mindestens teilweise mit dem Reduktionsmittel direkt beladen werden kann.

**Revendications**

1. Procédé pour éliminer l'oxygène élémentaire à l'aide d'un agent réducteur d'un agent de refroidissement liquide circulant dans un ou plusieurs circuits fermés, une partie de l'agent de refroidissement étant prélevée de façon continue ou intermittente du circuit principal (1) en vue du dessalement et amenée dans un circuit auxiliaire (2) à un filtre à lit mixte échangeur d'ions (5), caractérisé en ce que la résine échangeuse d'anions ou de cations contenue dans le filtre à lit mixte échangeur d'ions (5) est chargée directement au moins pour partie de l'agent réducteur de façon que celui-ci soit directement fixé sur la résine échangeuse d'anions ou de cations.

2. Procédé suivant la revendication 1, caractérisé en ce que l'acide ascorbique est utilisé comme agent réducteur.

3. Procédé suivant la revendication 1, caractérisé en ce que l'hydrazine NH$_2$NH$_2$ ou l'hydroxylamine NH$_2$OH est utilisée comme agent réducteur, des complexes de métal et de phtalocyanine, des dérivés de 4,4'-bipyridinium, des dérivés d'anthraquinone ou des métaux catalytiquement actifs étant prévus dans les deux cas comme agents d'activation.

4. Installation pour l'élimination de l'oxygène élémentaire à l'aide d'un agent réducteur d'un agent de refroidissement liquide circulant dans un ou plusieurs circuits fermés, dans laquelle il est prévu un circuit principal (1) contenant la totalité des appareils (3) dans le circuit de refroidissement, de même qu'un circuit auxiliaire (2) comprenant un filtre à lit mixte échangeur d'ions (5) et une pompe de circulation commune, caractérisée en ce qu'immédiatement à l'amont du filtre à lit mixte échangeur d'ions (5) est prévue une installation (6) pour l'admission de l'agent réducteur de façon que le filtre à lit mixte échangeur d'ions (5) puisse être chargé directement au moins pour partie de l'agent réducteur.

**Claims**

1. Process for the removal of elemental oxygen by means of a reducing agent from a liquid coolant circulating in one or more closed circulations, some of the coolant being branched off continuously or intermittently from the main circulation (1) for the purpose of salt removal and being fed to an ion exchanger mixed-bed filter (5) in a secondary circulation (2), characterized in that the anion or cation exchanger resin contained in the ion exchanger mixed-bed filter (5) is immediately at least partially laden with the reducing agent, in such a way that this is connected directly to the anion or cation exchanger resin.

2. Process according to Claim 1, characterized in that ascorbic acid is used as the reducing agent.

3. Process according to Claim 1, characterized in that hydrazine NH$_2$NH$_2$ or hydroxylamine NH$_2$OH is used as the reducing agent, metal- phthalocyanine complexes, 4,4'-bipyridinium compounds, anthraquinone derivatives or catalytically active metals being provided in both cases as activating agents.

4. Apparatus for the removal of elemental oxygen by means of a reducing agent from a liquid coolant circulating in one or more closed circulations, a main circulation (1) which contains all the plant (3) in the cooling circulation and a secondary circulation (2) which contains an ion exchanger mixed-bed filter (5) and a common circulatory pump (4) being provided, characterized in that a means (6) for metering the reducing agent is provided immediately upstream of the ion exchanger mixed-bed filter (5), the said means being such that the ion exchanger mixed-bed filter (5) can be directly laden at least partially with the reducing agent.

FIG.1